# EUROPEAN PATENT SPECIFICATION

(11) **EP 3 317 168 B1**
(45) Date of publication and mention of the grant of the patent: **22.04.2020**
(21) Application number: 16821729.7
(22) Date of filing: 13.06.2016
(51) Int. Cl.: B62D 61/12, B62D 55/10, B62D 55/108, B62D 55/12, B62D 55/30, B62D 55/02, B60P 3/41

(54) **ARRANGEMENT AND VEHICLE**
ANORDNUNG UND FAHRZEUG
AGENCEMENT ET VÉHICULE

(30) Priority: 03.07.2015 SE 1550970
(43) Date of publication of application: 09.05.2018
(73) Proprietor: Komatsu Forest AB, 907 04 Umeå (SE)
(72) Inventor: NILSSON, Erik, 913 42 Obbola (SE); BOSTRÖM, Ola, 907 88 Täfteå (SE)
(74) Representative: Zacco Sweden AB
(86) International application number: PCT/SE2016/050569
(87) International publication number: WO 2017/007395

(56) References cited:
- WO-A1-2013/178882
- FI-A- 20 070 824
- US-A- 2 974 976
- US-A- 4 079 798
- US-A- 4 657 099

## Description

### TECHNICAL AREA

This invention concerns an arrangement intended to be mounted at a vehicle that comprises a load-bearing part and driving wheels. The invention concerns also a vehicle comprising such an arrangement.

### BACKGROUND

Vehicles, machines, agricultural machines and forestry machines have long been used within forestry in order to automate many of the operations that are to be carried out on location in a forest. The vehicles have a weight that is not insignificant, independently of whether they are driven with the aid of wheels or tracks, which means that the forest, the support of the vehicle in the forest, the ground, over which the vehicle is driven and on which it stands, is affected. The ground is compressed by the weight of the vehicle and the damage to the ground may be permanent in the form of damage that does not recover without intervention. This damage to the ground may result in erosion, leakage of humus and nutrients, the unplanned formation of ditches, and compression of the pore system of the ground, all of which may have consequences. All such consequences affect the remaining forest, through, for example, lower resistance to storms due to roots that are torn off and/or thick roots that are shallow, to increased root rot as a consequence of root damage, and to loss of growth. Once the damage has taken place, all attempts to restore the ground are expensive, or totally impossible.

Repair of damage caused by driving is most often of a cosmetic nature. Up to half of the support capacity of the ground arises from the roots. The support capacity is, therefore, difficult to restore when the vegetation and root systems have been broken. Furthermore, repair by, for example, the use of an excavator means that the ground is excavated one more time. This increases further the risk for the undesired transport of slurry, humus, nutrients and heavy metals into lakes and watercourses. For these reasons, the damage caused by driving should be attempted to be prevented as far as possible.

In order to avoid damage to the ground and damage caused by driving, a great deal of time has been invested in planning appropriate routes, passages and collection points well in advance of a felling operation. This is not only time-consuming but also expensive.

The compression of the ground by the weight of the vehicle can lead also to the driving of the vehicle becoming more difficult.

Patent application Fl 20070824A discloses a plurality of wheels that could be lifted and lowered in a vertical direction, and thereby distribute the payload on the vehicle axles on various types of grounds.

Patent application WO 2013/17882 A1 discloses an arrangement in a forestry machine, comprising at least one auxiliary wheel, in order to increase the load-bearing capacity of the rear part, said extra wheel(s) can be individually controlled in the vertical direction and are mounted at the vehicle in order to distribute the weight of the vehicle. The arrangement includes a track running around both a set of bogie wheels and an auxiliary wheel. Furthermore it discloses that the tension in the track can be influenced by the position of the support arm, so that the tension in the track remains essentially constant.

### SUMMARY OF THE INVENTION

One purpose of the present arrangement is to reduce the influence on the forest from a vehicle, on the support of a vehicle in the forest, on the ground, where the vehicle is driven or allowed to stand. This purpose is achieved with an arrangement comprising the technical features that are made clear by claim 1. This purpose is achieved also with a vehicle comprising such an arrangement according to claim 12.

### DESCRIPTION OF DRAWINGS

Figure 1 shows a vehicle and an arrangement according to the invention.
Figure 2 shows the vehicle and the arrangement in Figure 1 from above.
Figure 3 shows a second embodiment of a vehicle and an arrangement according to the invention.
Figure 4 shows the vehicle and the arrangement in Figure 3 from above.
Figure 5 shows an auxiliary motor comprised in an arrangement according to the invention.
Figure 6 shows a damping arrangement comprised in an arrangement according to the invention.
Figure 7 shows a tension arrangement comprised in an arrangement according to the invention.

### DESCRIPTION OF EMBODIMENTS

This invention concerns an arrangement 1 intended to be mounted at a vehicle 2. The vehicle 2 comprises a load-bearing part 3 and driving bogie wheels 4.

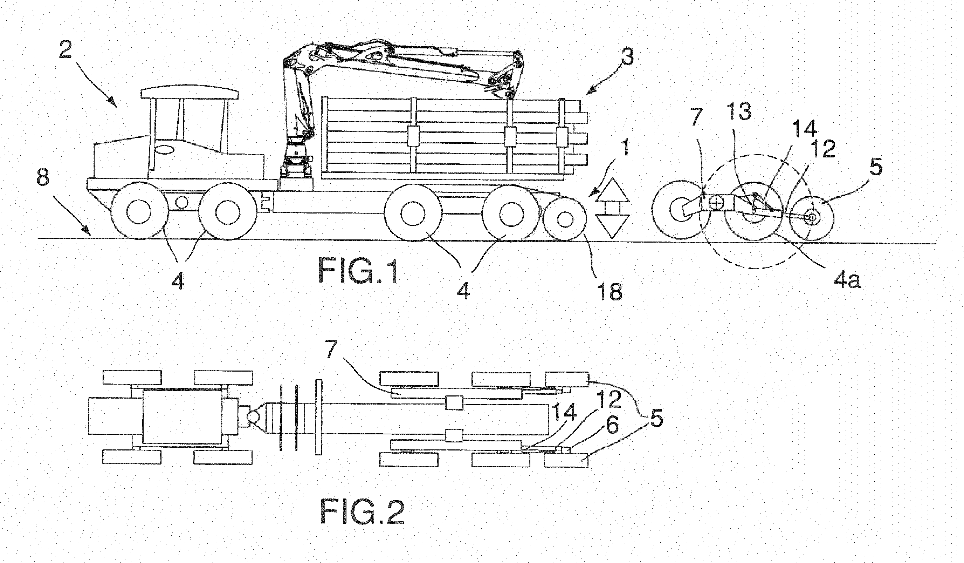

The arrangement 1 comprises at least two extra wheels 5 that can be individually controlled, where each extra wheel 5 is arranged at a fixed, non-rotatable, pivotable, shaft 6. At least one bogie wheel 4 is arranged at, fixed at, a bogie box 7. Also the extra wheel 5 is arranged at, fixed at, the bogie box 7 in order to distribute the weight of the machine, the gross weight of the machine including its payload weight, over more areas of a support 8, the ground, and in this way improve the distribution of weight and reduce the pressure against the support, the ground. The extra wheels 5 give a direct support and a supplementary ability to distribute the weight, in addition to the normal vehicle wheels 4. See Figures 1-4.

The term "individually controlled extra wheels 5" is here used to denote that each extra wheel, independently of its location on the vehicle 2, can be controlled and adjusted and can follow the support 8, without being influenced by, and without influencing, other extra wheels and their locations. It is possible also that two extra wheels 5 be located on the same side of the vehicle 2, if this is required in special terrain. It is possible also that more than two extra wheels 5 be mounted at a vehicle.

The individually controlled extra wheels 5 are subject to a driving force. The driving force on the wheels further facilitates the driving of the vehicle 2 on the support, and since the extra wheels 5 are driven and move relative to the support, the extra wheels 5 will be in motion and will not become as easily stuck in such material as is located on the support 8, such as, for example, vegetation.

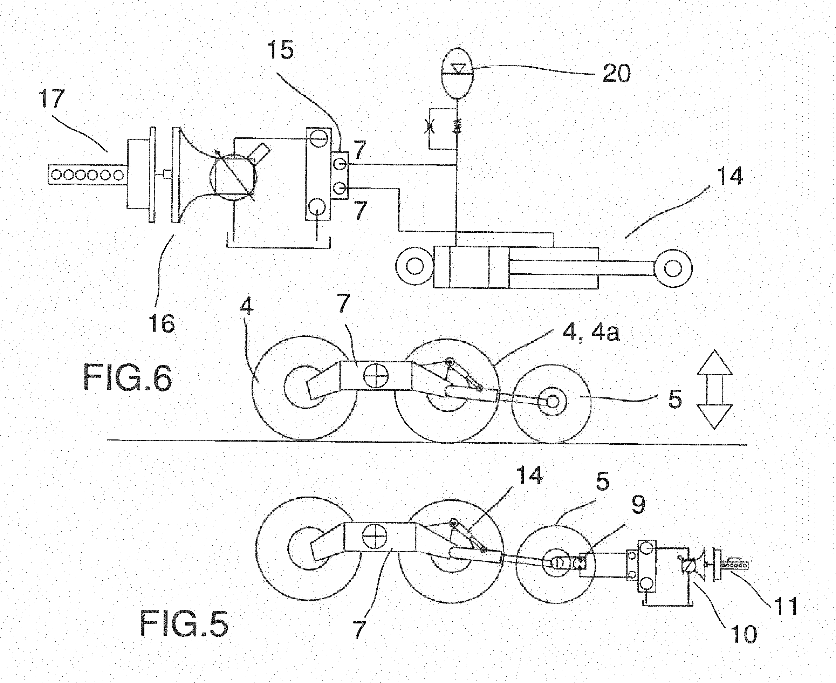

The individually controlled extra wheels 5 may be hydraulically driven or electrically driven. It is appropriate that the arrangement 1 comprise an auxiliary motor 9 that drives each extra wheel 5. The motor 9 is driven by a hydraulic system comprising a pump 10. The pump 10 is driven by an additional source of energy 11, such as, for example, a diesel engine, electric motor or similar. See Figure 5.

The arrangement 1 comprises at least two arms 12 on which an extra wheel 5 is mounted. Each arm 12 is individually controlled and mounted in bearings, and can move independently of the motion of the other arm. Each arm 12 is principally mounted in bearings in a horizontal axis 13 that essentially coincides with the closest wheel 4a of the bogie and its wheel axle, in order to permit the extra wheel 5 to be lifted up and down without the axle separation between the closest wheel 4a of the bogie and the extra wheel 5 changing by any amount worthy of mention.

Each arm 12 comprises a damping arrangement 14 that damps the motions of the arm. It is appropriate that the damping arrangement 14 of the arm comprise a damped cylinder that retains, presses, the extra wheel 5 against the support 8 in order to ensure that the extra wheel 5 is in contact with the support 8 and in this way improve the distribution of weight and reduce the pressure exerted by the vehicle 2 onto the support 8, the ground. The damping arrangement, the damped cylinder 14, is controlled by a hydraulic unit 15 that is fed by a hydraulic pump 16 that obtains its energy from a selected source of energy 17, such as, for example, an electric motor, a diesel engine or other source of energy or source of driving power. The damping arrangement, the damping cylinder 14, comprises an accumulator 20 that offers a spring facility and that can store energy for a short period. See Figure 6.

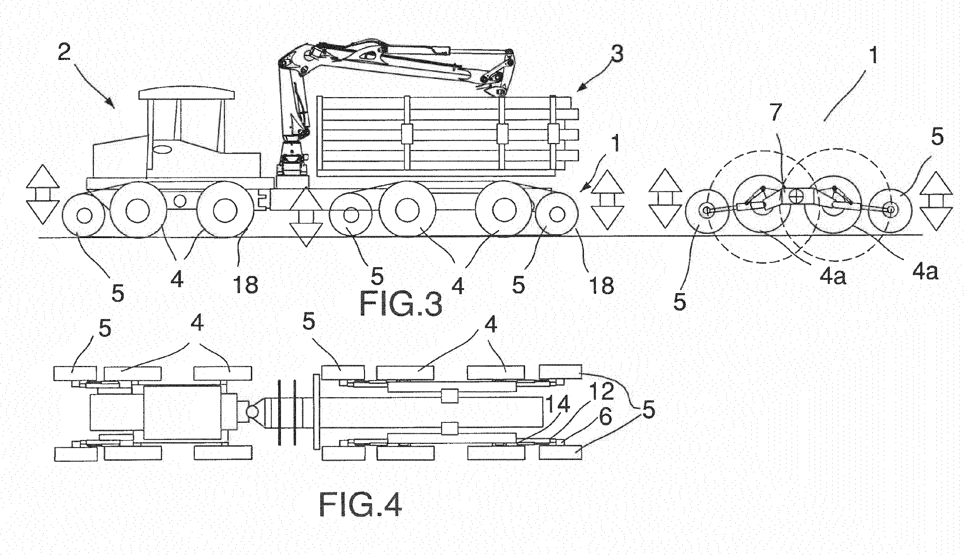

The arrangement 1 comprises a track 18 that protects against skidding, distributes the weight, and reduces ground pressure. This track 18 is located around each set of bogie wheels 4 and the extra wheel 5. See Figures 1 and 3.

Two extra wheels 5 are arranged at at least two bogie boxes 7, one on each bogie box 7, arranged to be parallel one on each side of the vehicle 2, one extra wheel 5 at one of the two bogie wheels 4 in the forwards and/or backwards direction of the vehicle 2 one on each side of the vehicle 2. See Figures 1 and 2. A further alternative is that four extra wheels 5 are arranged at at least two bogie boxes 7 arranged to be parallel one on each side of the vehicle 2, one extra wheel 5 at each bogie wheel 4 in the forwards and backwards direction of the vehicle 2. See Figures 3 and 4.

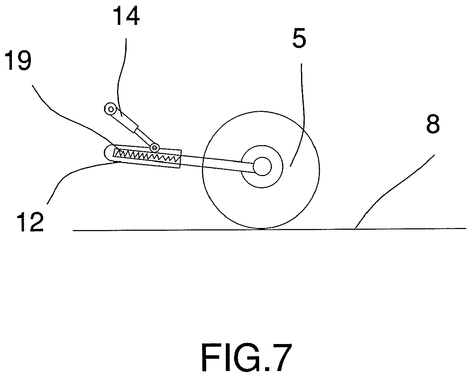

The arrangement comprises a tension arrangement 19 in the form of a spring-loaded arrangement, such as a cylinder under pressure or a coiled spring unit, in order to absorb motions along the length of the arm 12 such that the length of the track, and its tension, do not change when the arm 12 moves up and down. See Figure 7.

The invention concerns also a vehicle 2 comprising an arrangement 1 of the type that has been described above. The load-bearing part 3 of the vehicle comprises a conventional load-bearing frame. The load-bearing part may comprise also a separate displaceable load carrier. The driving wheels 4 of the vehicle comprise a mechanically driven, a hydraulically driven, or an electrically driven bogie. See Figures 1-7.

The vehicle 2 is intended to be used within forestry or agriculture since it is within these fields of use that it is economically and biotopically interesting that damage to the ground is avoided or at least minimised. Other fields of use in which damage to the ground should be avoided or at least minimised may, of course, become relevant.

## Claims

1. An arrangement (1) intended to be mounted at a vehicle (2) intended for forestry, comprising a load-bearing part (3) and driving bogie wheels (4) where the arrangement (1) comprises at least two extra wheels (5) that can be individually controlled in the vertical direction where each extra wheel is arranged at a shaft (6) that is fixed and that is not rotatable, pivotable, and is arranged at the bogie box (7) of the vehicle in order to distribute the weight of the machine, the gross weight of the machine including its payload weight, over more areas of a support (8) and in this way improve the distribution of weight and reduce the pressure exerted against the support (8), **characterised in that** the individually controlled extra wheels (5) are subject to a driving force and mounted at at least two arms (12) arranged at the bogie boxes of the vehicle, that a track (18) is placed around each set of bogie wheels (4) and the extra wheel (5) in order to protect against skidding and to distribute the weight, reducing the ground pressure and that a tension arrangement (19) in the form of a cylinder under pressure or a coiled spring unit is arranged at each arm in order to absorb motions in the length of the arm (12) such that the length of the track does not change when the arm (12) moves up and down.

2. The arrangement according to claim 1, comprising an auxiliary motor (9) that drives the extra wheel.

3. The arrangement according to claim 2, where the motor (9) is driven by a hydraulic system comprising a pump (10).

4. The arrangement according to claim 3, where the pump (10) is driven by a further source of energy (11).

5. The arrangement according to claim 1, where each arm (12) is individually controlled and mounted in bearings, and can move independently of the motion of the other arm.

6. The arrangement according to any one of the preceding claims, where each arm (12) is mounted in bearings in a horizontal axis (13) that essentially coincides with a wheel axle at the wheel at the bogie that is closest to the extra wheel, in order to permit the extra wheel (5) to be lifted up and down without the axle separation between the closest wheel (4a) of the bogie and the extra wheel (5) changing by any amount worthy of mention.

7. The arrangement (1) according to any one of claims 5-6, where each arm (12) comprises a damping arrangement (14) that damps the motions of the arm.

8. The arrangement (1) according to claim 7, where the damping arrangement (14) comprises a cylinder that damps the motions of the arm and that is controlled by a hydraulic unit (15) that is fed by a hydraulic pump (16) that obtains its energy from a selected source of energy (17).

9. The arrangement (1) according to claims 7 or 8, comprising an accumulator (20) that offers a spring facility and that can store energy for a short period.

10. The arrangement according to any one of claims 1-9, where two extra wheels (5) are arranged at at least two bogie boxes (7), arranged to be parallel one on each side of the vehicle (2), one extra wheel (5) at one of the two bogie wheels (4a) in the forwards and/or backwards direction of the vehicle (2), one on each side of the vehicle (2).

11. The arrangement according to any one of claims 1-10, where four extra wheels (5) are arranged at at least two bogie boxes (7), arranged to be parallel on each side of the vehicle (2), one extra wheel (5) at each bogie wheel (4a) in the forwards and backwards direction of the vehicle (2).

12. A vehicle (2) comprising an arrangement (1) according to any one of claims 1-11.

13. The vehicle (2) according to claim 12, where the load-bearing part (3) comprises a conventional load-bearing frame.

14. The vehicle (2) according to claim 12 or 13, where the load-bearing part (3) comprises a separate displaceable load carrier.

15. The vehicle (2) according to any one of claims 12-14, where the driving bogie wheels (4) comprise a mechanically driven bogie.

16. The vehicle (2) according to any one of claims 12-14, where the driving bogie wheels (4) comprise a hydraulically driven bogie.

17. The vehicle (2) according to any one of claims 12-14, where the driving bogie wheels (4) comprise an electrically driven bogie.

## Patentansprüche

1. Anordnung (1) zum Montieren an einem für Forstarbeit eingerichteten Fahrzeug (2), umfassend einen lasttragenden Teil (3) und Antriebslaufräder (4), wobei die Anordnung (1) mindestens zwei Zusatzräder (5) umfasst, die in der Vertikalrichtung einzeln gesteuert werden können, wobei jedes Zusatzrad an einer Welle (6) angeordnet ist, die fest ist und nicht drehbar, schwenkbar ist und am Fahrgestell (7) des Fahrzeugs angeordnet ist, um das Gewicht der Maschine, wobei das Bruttogewicht der Maschine ihre Nutzlastgewicht umfasst, über mehrere Bereiche einer Unterstützung (8) zu verteilen und damit die Verteilung von Gewicht zu verbessern und den gegen die Unterstützung (8) ausgeübte Druck zu verringern, **dadurch gekennzeichnet, dass** die einzeln gesteuerten Zusatzräder (5) einer Antriebskraft ausgesetzt sind und an mindestens zwei Armen (12), die an den Fahrgestellen des Fahrzeugs angeordnet sind, montiert sind, dass eine Gleiskette (18) um jeden Satz der Laufräder (4) und das Zusatzrad (5) herum angeordnet ist, um gegen Rutschen zu schützen und das Gewicht zu verteilen, wodurch die Bodenpressung verringert wird, und dass eine Spannanordnung (19) in Form eines Zylinders unter Druck oder eine gespulte Federeinheit an jedem Arm angeordnet ist, um Bewegungen in der Länge des Arms (12) zu absorbieren, so dass die Länge der Gleiskette sich nicht verändert, wenn der Arm (12) sich nach oben und unten bewegt.

2. Anordnung nach Anspruch 1, umfassend einen das Zusatzrad antreibenden Hilfsmotor (9).

3. Anordnung nach Anspruch 2, wobei der Motor (9) durch ein eine Pumpe (10) umfassendes Hydrauliksystem angetrieben wird.

4. Anordnung nach Anspruch 3, wobei die Pumpe (10) durch eine weitere Energiequelle (11) angetrieben wird.

5. Anordnung nach Anspruch 1, wobei jeder Arm (12) einzeln gesteuert wird und in Lagern montiert ist und sich unabhängig von der Bewegung des anderen Arms bewegen kann.

6. Anordnung nach einem der vorgehenden Ansprüche, wobei jeder Arm (12) in Lagern in einer horizontalen Achse (13) montiert ist, die im Wesentlichen mit einer Radwelle am Rad am Fahrgestell, das am Zusatzrad am nächsten ist, zusammenfällt, um zu erlauben, dass das Zusatzrad (5) gehoben und gesenkt wird ohne, dass die Wellentrennung zwischen dem nächst gelegenen Rad (4a) des Fahrgestells und dem Zusatzrad (5) sich erwähnenswert verändert.

7. Anordnung (1) nach einem der Ansprüche 5-6, wobei jeder Arm (12) eine Dämpfungsanordnung (14) umfasst, die die Bewegungen des Arms dämpft.

8. Anordnung (1) nach Anspruch 7, wobei die Dämpfungsanordnung (14) einen Zylinder umfasst, der die Bewegungen des Arms dämpft und durch eine Hydraulikeinheit (15) gesteuert wird, die durch eine Hydraulikpumpe (16) versorgt wird, die ihre Energie von einer ausgewählten Energiequelle (17) erhält.

9. Anordnung (1) nach Anspruch 7 oder 8, umfassend einen Akkumulator (20), der eine Federeinrichtung aufweist und für einen kurzen Zeitraum Energie speichern kann.

10. Anordnung nach einem der Ansprüche 1-9, wobei zwei Zusatzräder (5) an mindestens zwei Fahrgestellen (7) angeordnet sind, eingerichtet, um parallel zu sein, ein auf jeder Seite des Fahrzeugs (2), ein Zusatzrad (5) an einem der zwei Laufräder (4a) in der Vorwärts- und/oder der Rückwärtsrichtung des Fahrzeugs (2), ein auf jeder Seite des Fahrzeugs (2).

11. Anordnung nach einem der Ansprüche 1-10, wobei vier Zusatzräder (5) an mindestens zwei Fahrgestellen (7) angeordnet sind, eingerichtet, um auf jeder Seite des Fahrzeugs (2) parallel zu sein, ein Zusatzrad (5) an jedem Laufrad (4a) in der Vorwärts- und/oder der Rückwärtsrichtung des Fahrzeugs (2).

12. Fahrzeug (2), umfassend eine Vorrichtung (1) nach einem der Ansprüche 1-11.

13. Fahrzeug (2) nach Anspruch 12, wobei der lasttragende Teil (3) einen herkömmlichen lasttragenden Rahmen umfasst.

14. Fahrzeug (2) nach Anspruch 12 oder 13, wobei der lasttragende Teil (3) einen getrennten verlagerbaren Lastträger umfasst.

15. Fahrzeug (2) nach einem der Ansprüche 12-14, wobei die Antriebslaufräder (4) ein mechanisch angetriebenes Fahrgestell umfassen.

16. Fahrzeug (2) nach einem der Ansprüche 12-14, wobei die Antriebslaufräder (4) ein hydraulisch angetriebenes Fahrgestell umfassen.

17. Fahrzeug (2) nach einem der Ansprüche 12-14, wobei die Antriebslaufräder (4) ein elektrisch angetriebenes Fahrgestell umfassen.

## Revendications

1. Agencement (1) destiné à être monté au niveau d'un véhicule (2) destiné à la foresterie, comprenant une partie porteuse (3) et des roues de bogie d'entraînement (4), l'agencement (1) comprenant au moins deux roues supplémentaires (5) qui peuvent être commandées individuellement dans le sens vertical où chaque roue supplémentaire est disposée sur un arbre (6) qui est fixe et qui n'est pas rotatif, pivotant et est disposé sur la boîte à bogies (7) du véhicule afin de répartir le poids de la machine, le poids brut de la machine, y compris son poids de charge utile, sur plusieurs zones d'un support (8) et ainsi améliorer la répartition de poids et réduire la pression exercée contre le support (8), **caractérisé en ce que** des roues supplémentaires commandées individuellement (5) sont soumises à une force motrice et montées sur au moins deux bras (12) disposés au niveau des boîtes à bogies du véhicule, qu'une piste (18) est placée autour de chaque jeu de roues à bogie (4) et la roue supplémentaire (5) pour protéger contre le dérapage et pour répartir le poids, réduire la pression au sol, et qu'un agencement de tension (19) dans la forme d'un cylindre sous pression ou d'une unité de ressort hélicoïdal est disposé à chaque bras afin d'absorber des mouvements dans la longueur du bras (12) de telle sorte que la longueur de la piste ne change pas lorsque le bras (12) monte et descend.

2. Agencement selon la revendication 1, comprenant un moteur auxiliaire (9) qui entraîne la roue supplémentaire.

3. Agencement selon la revendication 2, dans lequel le moteur (9) est entraîné par un système hydraulique comprenant une pompe (10).

4. Agencement selon la revendication 3, dans lequel la pompe (10) est entraînée par une autre source d'énergie (11).

5. Agencement selon la revendication 1, dans lequel chaque bras (12) est commandé individuellement et monté dans des paliers, et peut se déplacer indépendamment du mouvement de l'autre bras.

6. Agencement selon l'une quelconque des revendications précédentes, dans lequel chaque bras (12) est monté dans des paliers dans un axe horizontal (13) qui coïncide essentiellement avec un axe de roue au niveau de la roue du bogie le plus proche de la roue supplémentaire, afin de permettre le levage de la roue supplémentaire (5) vers le haut et vers le bas sans que la séparation de l'axe entre la roue la plus proche (4a) du bogie et la roue supplémentaire (5) ne change de tout montant digne de mention.

7. Agencement (1) selon l'une quelconque des revendications 5 à 6, dans lequel chaque bras (12) comprend un agencement d'amortissement (14) qui amortit les mouvements du bras.

8. Agencement (1) selon la revendication 7, dans lequel l'agencement d'amortissement (14) comprend un cylindre qui amortit les mouvements du bras et qui est commandé par une unité hydraulique (15) alimentée par une pompe hydraulique (16) qui obtient son énergie à partir d'une source d'énergie sélectionnée (17).

9. Agencement (1) selon les revendications 7 ou 8, comprenant un accumulateur (20) qui offre une installation à ressort et qui peut stocker de l'énergie pendant une courte période.

10. Agencement selon l'une quelconque des revendications 1 à 9, dans lequel deux roues supplémentaires (5) sont disposées au niveau d'au moins deux boîtes à bogies (7), agencées pour être parallèles une de chaque côté du véhicule (2), une roue supplémentaire (5) à l'une des deux roues de bogie (4a) dans le sens avant et / ou arrière du véhicule (2), une de chaque côté du véhicule (2).

11. Agencement selon l'une quelconque des revendications 1 à 10, dans lequel quatre roues supplémentaires (5) sont disposées sur au moins deux bogies (7), agencées pour être parallèles de chaque côté du véhicule (2), une roue supplémentaire (5) au niveau de chaque roue de bogie (4a) dans le sens avant et arrière du véhicule (2).

12. Véhicule (2) comprenant un agencement (1) selon l'une quelconque des revendications 1 à 11.

13. Véhicule (2) selon la revendication 12, dans lequel la partie porteuse (3) comprend un châssis porteur conventionnel.

14. Véhicule (2) selon la revendication 12 ou 13, dans lequel la partie porteuse (3) comprend un support de charge déplaçable séparé.

15. Véhicule (2) selon l'une quelconque des revendications 12 à 14, dans lequel les roues de bogie d'entraînement (4) comprennent un bogie entraîné mécaniquement.

16. Véhicule (2) selon l'une quelconque des revendications 12 à 14, dans lequel les roues de bogie d'entraînement (4) comprennent un bogie entraîné hydrauliquement.

17. Véhicule (2) selon l'une quelconque des revendications 12 à 14, dans lequel les roues de bogie 'entraînement (4) comprennent un bogie entraîné électriquement.
